# EUROPÄISCHE PATENTSCHRIFT

(11) **EP 0 763 458 B1**
(45) Veröffentlichungstag und Bekanntmachung des Hinweises auf die Patenterteilung: **25.03.1998**
(21) Anmeldenummer: 96111706.6
(22) Anmeldetag: 19.07.1996
(51) Int. Cl.: B62D 27/02, B62D 25/06, B62D 29/00

(54) **Verbindung zwischen einem Strangpressprofil und einem daran angeschlossenen flächigen Bauteil an einer Fahrzeugkarosserie**
Connection between an extruded profile and a plate-like construction element in a vehicle bodywork
Liaison entre un profilé extrudé et un élément de construction plan dans une carosserie de véhicule

(30) Priorität: 15.09.1995 DE 19534290
(43) Veröffentlichungstag der Anmeldung: 19.03.1997
(73) Patentinhaber: AUDI AG, 85045 Ingolstadt (DE)
(72) Erfinder: Enning, Norbert, 85095 Denkendorf (DE)
(74) Vertreter: Engelhardt, Harald

(56) Entgegenhaltungen:
- EP-A- 0 309 358
- EP-A- 0 461 345
- EP-A- 0 568 406
- DE-A- 1 430 809
- DE-A- 4 300 398
- DE-A-19 534 290
- DE-C- 4 342 960
- FR-A- 2 632 923

## Beschreibung

Die Erfindung betrifft eine Verbindung zwischen einem Strangpreßprofil und einem daran angeschlossenen flächigen Bauteil an einer Fahrzeugkarosserie nach dem Oberbegriff des Anspruchs 1 und wie gezeigt in EP-A-461345.

Übliche selbsttragende Fahrzeugkarosserien für Personenkraftwagen sind einschließlich der Tragstruktur aus Blechteilen hergestellt. Solche Karosserien sind relativ schwer, korrosionsgefährdet und nach der Verwendungsdauer eines Fahrzeugs nur aufwendig zu demontieren und wiederzuverwerten.

Um hier Verbesserungen zu schaffen, ist es bereits bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als gewichtsgünstige Leichtmetall-Strangprofile und die Knotenelemente als Leichtmetall-Gußteile ausgebildet. Solche Tragstrukturen weisen zudem eine hohe Steifigkeit und ein gutes Crashverhalten auf.

Die Öffnungen zwischen den Strangpreßprofilen einer solchen gitterartigen Tragstruktur sind durch angeschlossene flächige Bauteile, insbesondere Blechteile, als Außenhaut des Fahrzeugs auszukleiden. Dazu sind Schraubverbindungen bekannt (WO92/11161), hier zwischen einer Kotflügelbank als Leichtmetall-Strangpreßprofil und einem Kotflügel als flächigem Stahlblech-Bauteil.

Weiter ist ein Rahmenteil einer Kraftfahrzeugkarosserie bekannt (DE 39 18 280 A1), bei dem ein Strangpreßprofil mit einem vorgeformten Blechteil verbunden ist, welches einen Abschnitt der Außenkontur des Strangpreßprofils übergreift und mit dieser einen Hohlraum einschließt. Das Strangpreßprofil weist hier einen seitlich abstehenden Profillängsflansch auf. Das Blechteil ist mit einem Randflansch abgekantet, wobei der Profillängsflansch und der Blechteilrandflansch flächig aneinanderliegen und durch Klebung verbunden sind. An der anderen Verbindungsseite liegt ein Randbereich des Blechteils direkt flächig an der Außenseite des Strangpreßprofils an und ist dort ebenfalls verklebt. Es wird somit hier ein Rahmenteil aus einem Verbund eines Strangpreßprofils und eines Blechteils als Hohlträger mit zwei Kammern geschaffen. Ein ggfs. erforderlicher Anschluß eines flächigen Bauteils als Karosserieaußenhaut ist hier nicht dargestellt.

Es ist weiter eine Profilleiste aus Gummi oder gummiähnlichen Kunststoffen, insbesondere eine Dachkantenleiste für Kraftfahrzeugkarosserien, bekannt (DE 43 26 869 A1), die innerhalb ihres Querschnitts mindestens einen in ihrer Längsrichtung verlaufenden Energie- und/oder Flüssigkeitsleiter enthält. Die Lage solcher Profilleisten sind unabhängig von einer Verbindung zwischen einem Strangpreßprofil und einem daran angeschlossenen flächigen Bauteil. Zudem sind bei Dachkantenleisten mit Regenrinnen, die von außen ohne weiteres zugänglich sind, einfach Manipulationen an den Energie- und/oder Flüssigkeitsleitern möglich, da der umgebende Gummi keinen ausreichenden Schutz darstellt und einfach durchtrennt werden kann. Bei der Verwendung dieser Profilleisten als Dichtungsbänder erfolgt eine betriebsmäßige Belastung und Volumenänderung des Gummis, die sich ungünstig auf die darin enthaltenen Leiter übertragen.

Aufgabe der Erfindung ist es, eine einfach herstellbare, kostengünstige und funktionsfähige Verbindung zwischen einem Strangpreßprofil und einem daran angeschlossenen, flächigen Bauteil an einem Kraftfahrzeug zu schaffen.

Diese Aufgabe wird mit den Merkmalen des Anspruchs 1 gelöst.

Gemäß Anspruch 1 weist das Strangpreßprofil einen seitlich abstehenden Profillängsflansch auf, der etwa parallel zur Anschlußebene des flächigen Bauteils liegt. Das Strangpreßprofil enthält zudem eine Profilrinne, die in Profillängsrichtung und etwa quer zum Profillängsflansch verläuft.

Das flächige Bauteil ist im Randbereich der Verbindung abgekantet und zur Bildung eines Bauteilrandflansches U-förmig zurückgebogen. Der Profillängsflansch und der Bauteilrandflansch liegen zumindest im Randkantenbereich flächig aneinander und sind verbunden.

An der Verbindung ist eine längs verlaufende Abdeckleiste vorgesehen. Diese weist einen zur Abdeckleistenmitte hin offenen U-Bereich als Klemmteil an einer Längsseite auf, einen quer zur U-Öffnung des Klemmteils verlaufenden Haltesteg an der anderen Längsseite sowie einen dazwischenliegenden, bevorzugt geschlossenen Brückenbereich.

Das Klemmteil ist mit seiner U-Öffnung formschlüssig zumindest teilweise über den freien Randbereich aus dem übereinanderliegenden Profillängsflansch und Bauteilrandflansch gesteckt und der Halteflansch ist formschlüssig in die Profilrinne eingesteckt.

Das Strangpreßprofil ist bevorzugt aus Leichtmetall, insbesondere aus einer Aluminiumlegierung, hergestellt. Das flächige Bauteil ist bevorzugt als Stahlblechteil der Außenhaut einer Fahrzeugkarosserie ausgebildet.

Die Verbindung ist einfach und preisgünstig herstellbar, da die Anformung des Profillängsflansches und die Abkantung des Bauteilrandflansches nur einen geringen Aufwand erfordern. Die Abdeckleiste ergibt zudem eine Stabilisierung und Fixierung der Verbindung, da einerseits durch den Klemmbereich der Profillängsflansch und der Bauteilrandflansch zusammengehalten werden und die Abdeckleiste durch den quer verlaufenden Haltesteg in der Profilrinne gegen ein Abziehen oder Abfallen entgegen der Aufsteckrichtung des Klemmteils gesichert ist.

Die Abdeckleiste dient zudem als Unfallschutz, da scharfe Kanten des Profillängsflansches und Bauteilrandflansches übergriffen und abgedeckt sind. Dazu ist es zweckmäßig, die Abdeckleiste abgerundet, bevorzugt aus Kunststoffmaterial, herzustellen.

Mit der beanspruchten Verbindung wird das flächige Bauteil an das Strangpreßprofll seiflich angeschlossen und dieses somit nicht überdeckt und verkleidet. Die Tragstruktur aus Strangpreßprofilen wird dadurch sichtbar. Eine solche Visualisierung eröffnet neue Gestaltungs- und Designmöglichkeiten für den optischen Eindruck eines Fahrzeugs. Zudem kann damit ein Fahrzeuglenker nach außen sichtbar zum Ausdruck bringen, daß er ein modernes, gewichtsgünstiges und damit verbrauchsarmes Fahrzeug fährt, das einfach recycelbar und damit umweltfreundlich ist.

Die beanspruchte Verbindung kann insbesondere auch mit vorlackierten Blechteilen ausgeführt werden, wobei die Strangpreßprofile in ihrer Leichtmetallstruktur und Farbe sichtbar erhalten bleiben können.

Die Verbindung zwischen dem Profillängsflansch und Bauteilrandflansch kann grundsätzlich mit unterschiedlichen Maßnahmen, insbesondere durch Verschraubungen, vorgenommen werden. In einer besonders bevorzugten Ausführung nach Anspruch 2, die zu einer durchgehend dichten Verbindung führt, wird zwischen dem Profillängsflansch und dem Bauteilrandflansch eine Klebeschicht eingebracht. Im Montageverfahren wird nach der Aufbringung der Klebeschicht und dem Aneinanderlegen des Profillängsflansches und des Bauteilrandflansches die Abdeckleiste mit ihrem Klemmteil aufgesteckt. Vorteilhaft wird dabei die Klebeverbindung während des Aushärtens durch die aufgesteckte Abdeckleiste fixiert.

Eine stabile Tragstruktur wird in an sich bekannter Weise dadurch erreicht, daß gemäß Anspruch 3 die Strangpreßprofile Hohlträgerprofile sind, wobei der Profillängsflansch jeweils leistenförmig seitlich angeformt ist.

Die angegebene Verbindung eignet sich insbesondere zur Herstellung einer Außenhaut der Karosserie zwischen den Strangpreßprofilen, wobei dann der Profillängsflansch und die Profilrinne nach Anspruch 4 zum Fahrzeuginnenraum hin weisen. Zweckmäßig wird zum Schutz der Verbindung und für eine zusätzliche Abdichtung zwischen dem abgekanteten Randbereich des flächigen Bauteils und dem Strangpreßprofil eine zur Außenseite hin weisende Gummidichtung angebracht. Diese wird nach Anspruch 5 in einer Aufnahmerinne am Strangpreßprofil eingeklemmt und gehalten.

Mit den Merkmalen des Anspruchs 6 wird entlang der Verbindung eine Längsvertiefung an der Fahrzeugaußenseite durch Schrägflächen der angrenzenden Bauteile geschaffen. Dies führt zu einer deutlichen Visualisierung der Strangprofiltragstruktur. Zudem sind durch den Schrägflächenübergang relativ große Toleranzen bei der Montage möglich, da keine engen Fugen mit parallel laufenden Kanten vorhanden sind, die schon bei geringen Breitenabweichungen als störend empfunden werden.

Bevorzugt wird nach Anspruch 7 das Strangpreßprofil an beiden gegenüberliegenden Längsseiten gleich mit einem Profillängsflansch und einer zugeordneten Profilrinne ausgebildet. Dabei kann an einer Seite die beanspruchte Verbindung eines flächigen Bauteils, beispielsweise eines Blechbauteils, liegen. An der anderen Seite kann dann eine entsprechende Verbindung vorgenommen werden oder beispielsweise eine Frontscheibe lediglich durch Verklebung auf dem Profillängsflansch angebracht werden.

Besonders vorteilhaft kann nach Anspruch 8 unter dem Brückenbereich der Abdeckleiste ein Aufnahmekanal für Elektrokabel und/oder Flüssigkeitsleiter gebildet sein. Dieser Aufnahmekanal fällt hier bei einer entsprechenden Ausbauchung des Brückenbereichs oder des Strangpreßprofils ohne zusätzlichen Aufwand ab. Eine Montage solcher Leiter ist einfach und kostengünstig möglich; ebenso evtl. Reparaturen und Nachrüstungen. Bei einer Demontage nach der Verwendungszeit des Fahrzeugs können die Leiter und die Abdeckleiste einfach entfernt, getrennt und recycelt werden.

Nach Anspruch 9 kann ggfs. seitlich anschließend an den Klemmteil der Abdeckleiste eine federnde Haltenase angeformt werden, die am flächigen Bauteil anliegt. Zwischen dieser Klemmnase und dem Bauteil können dann weitere Teile gehalten werden oder bis zur Aushärtung einer Klebung fixiert werden. Zudem kann dadurch ein optisch günstiger Anschluß ohne Fugen, beispielsweise an einem Dachhimmel, erreicht werden.

Die beanspruchte Verbindung eignet sich nach Anspruch 10 besonders für den Dachbereich, kann jedoch auch an anderen Stellen, insbesondere zur Visualisierung der Tragrahmenstruktur, verwendet werden.

Die Profilrinne im Strangpreßprofil kann nach Anspruch 11 zusätzlich zu ihrer Funktion als Aufnahme für den Haltesteg der Abdeckleiste auch als Schraubkanal verwendet werden. Damit können Anbauteile, wie z.B. Sonnenblenden, Spiegel, etc., direkt mit Verbindungsschrauben am Strangpreßprofll angebracht werden.

Anhand einer Zeichnung wird ein Ausführungsbeispiel der Erfindung mit weiteren Einzelheiten, Merkmalen und Vorteilen näher erläutert.

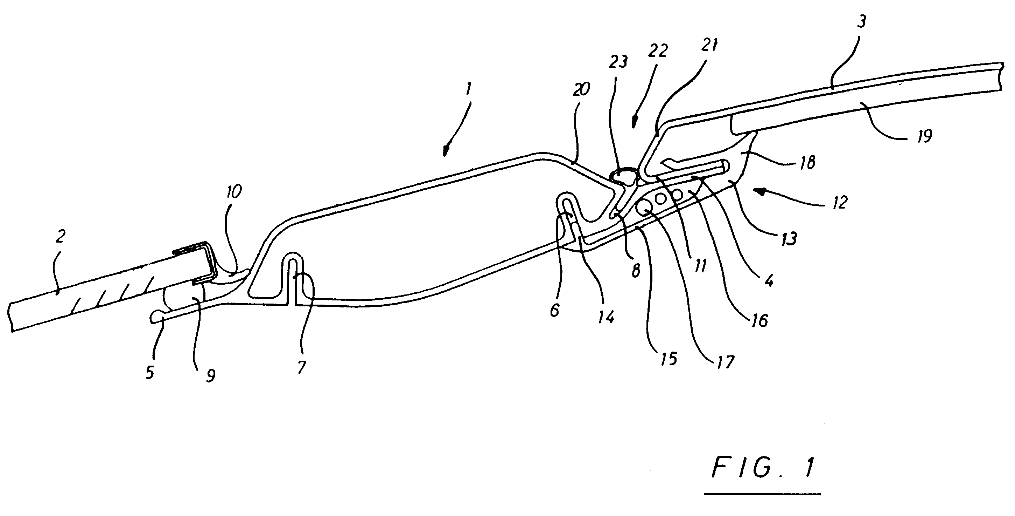

Die einzige Figur zeigt einen Querschnitt im Bereich eines vorderen Dachquerholms einer Fahrzeugkarosserie.

Ein Strangpreßprofil 1 als Hohlträgerprofil ist für einen vorderen Dachquerholm verwendet. Zur Fahrzeugvorderseite hin ist eine Frontscheibe 2 und zur Fahrzeugrückseite hin ein flächiges Bauteil 3 als Dachblech angeschlossen.

Das Strangpreßprofil weist zu beiden Seiten jeweils einen seiflich abstehenden Profillängsflansch 4, 5 auf, die sich beide etwa parallel zur Anschlußebene des Bauteils 3 erstrecken. Zudem ist das Strangpreßprofil 1 in dieser Richtung abgeflacht.

Zu beiden Seiten des Strangpreßprofils 1 enthält dieses angrenzend an die Profillängsflansche 4, 5 Profilrinnen 6, 7, die in Profillängsrichtung und etwa quer zu den Profillängsflanschen 4, 5 verlaufen. Während die Profilrinnen 6, 7 zur Fahrzeuginnenseite hin offen sind, ist eine weitere Aufnahmerinne 8 zur Fahrzeugaußenseite hin offen, die sich unmittelbar an den Profillängsflansch 4 mit einer schrägen Richtung dazu anschließt.

Die Frontscheibe 2 ist mit ihrem oberen Randbereich von oben her über eine Kleberraupe 9 mit dem Profillängsflansch 5 in an sich bekannter Weise verbunden. Zudem ist auf die Scheibenkante ein Profil mit einer am Strangpreßprofil 1 anliegenden Dichtlippe 10 aufgesetzt.

Die Profilrinne 7 ist hier frei dargestellt und kann als Schraubkanal für Verbindungsschrauben zur Befestigung von Anbauteilen, z.B. eines Spiegels oder von Sonnenblenden, verwendet werden. Der nicht benötigte Teil der Profilrinne 7 kann durch eine eingeklipste Leiste abgedeckt werden.

Das flächige Bauteil 3 ist im Randbereich der Verbindung abgekantet und zur Bildung eines Bauteilrandflansches 11 U-förmig zurückgebogen.

Der Profillängsflansch 4 und der Bauteilrandflansch 11 liegen flächig aneinander und sind durch einen dazwischen eingebrachten Kleber fest miteinander verbunden.

Im Bereich der Verbindung ist eine längs verlaufende Abdeckleiste 12 vorgesehen. Diese weist einen U-förmigen, seitlichen Klemmteil 13 auf, der auf die Verbindung zwischen dem Profillängsflansch 4 und dem Bauteilrandflansch 11 aufgesteckt ist. An der anderen Seite der Abdeckleiste 12 ist ein quer zur U-Öffnung des Klemmteils 13 verlaufender Haltesteg 14 angeformt, der in die Profilrinne 6 eingerastet ist.

Zwischen dem Klemmteil 3 und dem Haltesteg 14 liegt ein Brückenbereich 15 der Abdeckleiste 12, der einen geschlossenen Aufnahmekanal 16 für Versorgungsleitungen 17 abdeckt. Der Kanalquerschnitt ist durch eine Ausbauchung unter dem gerade durchgehenden Brückenbereich 15 bestimmt.

Seitlich am Klemmteil 13 ist zudem eine längs verlaufende Haltenase 18 angeformt, die mit ihrem Rand an einem vorgeformten Dachhimmel 19 anliegt.

Im Bereich der Verbindung weisen das Strangpreßprofil 1 und das flächige Bauteil 3 Schrägflächen 20 und 21 auf, dergestalt, daß eine Längsvertiefung 22 an der Fahrzeugaußenseite gebildet ist. Am Boden dieser Längsvertiefung ist eine Gummidichtung 23 eingesetzt, die in der Aufnahmerinne 8 gehalten ist.

Die Verbindung zwischen dem Strangpreßprofil 1 und dem flächigen Bauteil 3 wird so hergestellt, daß eine Kleberschicht auf den Profillängsflansch 4 aufgebracht und der Bauteilrandflansch zur Anlage gebracht wird. Anschließend werden die Abdeckleiste 12 mit dem Klemmteil 13 auf die Anlageverbindung gesteckt, die Versorgungsleitungen 17 in den Aufnahmekanal 16 eingeschoben und der Haltesteg 14 in die Profilrinne 6 eingeklipst. Dadurch ist während der Aushärtung des Klebers die Anlageverbindung fixiert.

## Patentansprüche

1. Verbindung zwischen einem Strangpreßprofil (1) und einem daran angeschlossenen flächigen Bauteil (3) an einer Fahrzeugkarosserie,
dadurch gekennzeichnet,
daß das Strangpreßprofil (1) einen seitlich abstehenden Profillängsflansch (4) aufweist, der etwa parallel zur Anschlußebene des flächigen Bauteils (3) liegt,
daß das Strangpreßprofil (1) eine Profilrinne (6) enthält, die in Profillängsrichtung und etwa quer zum Profillängsflansch (4) verläuft,
daß das flächige Bauteil (3) im Randbereich der Verbindung abgekantet und zur Bildung eines Bauteilrandflansches (11) U-förmig zurückgebogen ist,
daß der Profillängsflansch (4) und der Bauteilrandflansch (11) zumindest im Randkantenbereich flächig aneinanderliegen und verbunden sind,
daß an der Verbindung eine längsverlaufende Abdeckleiste (12) vorgesehen ist, mit einem zur Abdeckleistenmitte hin offenen U-Bereich als Klemmteil (13) an einer Längsseite, mit einem quer zur U-Öffnung des Klemmteils (13) verlaufenden Haltesteg (14) an der anderen Längsseite und mit einem dazwischenliegenden Brückenbereich (15),
daß das Klemmteil (13) mit seiner U-Öffnung formschlüssig zumindest teilweise über den freien Randbereich aus dem übereinanderliegenden Profillängsflansch (4) und Bauteilrandflansch (11) gesteckt ist, und
daß der Haltesteg (14) formschlüssig in die Profilrinne (6) eingesteckt ist.

2. Verbindung nach Anspruch 1, dadurch gekennzeichnet, daß zwischen dem Profillängsflansch (4) und dem Bauteilrandflansch (11) eine Klebeschicht eingebracht ist und die Klebeverbindung während des Aushärtens durch die aufgesteckte Abdeckleiste (12) fixiert ist.

3. Verbindung nach Anspruch 1 oder 2, dadurch gekennzeichnet, daß das Strangpreßprofil (1) ein Hohlträgerprofil ist, an das der Profillängsflansch (4) leistenförmig seiflich angeformt ist.

4. Verbindung nach einem der Ansprüche 1 bis 3, dadurch gekennzeichnet, daß der Profillängsflansch (4) und die Profilrinne (6) zum Fahrzeuginnenraum hin liegen, und
daß zwischen dem abgekanteten Randbereich des flächigen Bauteils (3) und dem Strangpreßprofil (1) eine Gummidichtung (23) angebracht ist.

5. Verbindung nach Anspruch 4, dadurch gekennzeichnet, daß an der Gummidichtung (23) ein Längssteg vorgesehen ist, der in einer zur Fahrzeugaußenseite weisenden Aufnahmerinne (8) am Strangpreßprofil (1) gehalten ist.

6. Verbindung nach Anspruch 4 oder 5, dadurch gekennzeichnet, daß im Bereich der Verbindung das Strangpreßprofil (1) und der Abkantbereich des flächigen Bauteils (3) Schrägflächen (20, 21) aufweisen, die gegeneinander und zum Fahrzeuginnenraum hin schräg gerichtet sind, so daß eine Längsvertiefung (22) an der Fahrzeugaußenseite gebildet ist, an deren Boden die Gummidichtung (23) eingesetzt ist.

7. Verbindung nach einem der Ansprüche 1 bis 6, dadurch gekennzeichnet, daß das Strangpreßprofil (1) an beiden gegenüberliegenden Längsseiten einen Profillängsflansch (4, 5) und je eine zugeordnete Profilrinne (6, 7) aufweist.

8. Verbindung nach einem der Ansprüche 1 bis 7, dadurch gekennzeichnet, daß unter dem Brückenbereich (15) durch eine Ausbauchung des Brückenbereichs (15) und/oder des Strangpreßprofils (1) ein Aufnahmekanal (16) für Elektrokabel und/oder Flüssigkeitsleiter (17) gebildet ist.

9. Verbindung nach einem der Ansprüche 1 bis 8, dadurch gekennzeichnet, daß seiflich anschließend an den Klemmteil (13) der Abdeckleiste (12) eine federnde Haltenase (18) angeformt ist, die am flächigen Bauteil (3) anliegt, insbesondere zum Anschluß an einen vorgeformten Dachhimmel (19).

10. Verbindung nach einem der Ansprüche 1 bis 9, dadurch gekennzeichnet, daß das Strangpreßprofll (1) ein Dachholm und das flächige Bauteil (3) ein angeschlossenes Dachblech ist.

11. Verbindung nach einem der Ansprüche 1 bis 10, dadurch gekennzeichnet, daß die Profilrinne (6, 7) als Schraubkanal für Verbindungsschrauben zur Befestigung von Anbauteilen verwendet ist.

## Claims

1. Connection between an extruded profile (1) and a plate-like construction element (3) joined to it on a vehicle body,
characterised in that
the extruded profile (1) incorporates a laterally protruding longitudinal flange section (4) roughly parallel to the joining plane of the plate-like construction element (3),
the extruded profile (1) contains a groove section (6) which extends longitudinally along the profile and roughly at a right angle to the longitudinal flange section (4),
the plate-like construction element (3) is bevelled in the peripheral region of the connection and is bent back in a U-shape to form a peripheral flange element (11),
the longitudinal flange section (4) and the peripheral flange element (11) rest against one another over a large area at least in the peripheral rim zone and are joined together,
a lengthwise cover strip (12) is provided at the connection, with a U-shaped region which opens towards the middle of the cover strip to act as a clamping element (13) on one longitudinal side, with a retaining link (14) running at a right angle to the U-opening of the clamping element (13) on the other longitudinal side and with a bridging zone (15) between them,
the clamping element (13) is pushed with its U-opening in a positive fit at least partially over the free peripheral zone out of the superjacent longitudinal flange section (4) and peripheral flange element (11), and
the retaining link (14) is pushed in a positive fit into the groove section (6).

2. Connection according to claim 1, characterised in that a layer of adhesive is incorporated between the longitudinal flange section (4) and the peripheral flange element (11) and the bonded joint is fixed by the pushed-on cover strip (12) while it cures.

3. Connection according to claim 1 or 2, characterised in that the extruded profile (1) is a hollow carrier section to which the longitudinal flange section (4) is moulded laterally in the manner of trim.

4. Connection according to any of claims 1 to 3, characterised in that the longitudinal flange section (4) and the groove section (6) are orientated towards the interior of the vehicle, and that
a rubber seal (23) is fitted between the bevelled peripheral region of the plate-like construction element (3) and the extruded profile (1).

5. Connection according to claim 4, characterised in that on the rubber seal (23) is provided a longitudinal link which is held on the extruded profile (1) in a receiving groove (8) pointing towards the exterior of the vehicle.

6. Connection according to claim 4 or 5, characterised in that in the region of the connection the extruded profile (1) and the bevelled region of the plate-like construction element (3) incorporate sloping faces (20, 21) which are directed obliquely at one another and towards the interior of the vehicle, with the result that on the exterior of the vehicle a longitudinal depression (22) is formed, on the floor of which the rubber seal (23) is inserted.

7. Connection according to any of claims 1 to 6, characterised in that the extruded profile (1) features a longitudinal flange section (4, 5) and a respective associated groove section (6, 7) on each of the two opposing longitudinal sides.

8. Connection according to any of claims 1 to 7, characterised in that below the bridging zone (15) a bulge in the bridging zone (15) and/or in the extruded profile (1) forms a duct (16) for receiving electrical cables and/or fluid lines (17).

9. Connection according to any of claims 1 to 8, characterised in that a resilient retaining lug (18) is moulded laterally contiguous with the clamping element (13) of the cover strip (12), and said lug (18) bears against the plate-like construction element (3), in particular to join it to a pre-formed headliner (19).

10. Connection according to any of claims 1 to 9, characterised in that the extruded profile (1) is a roof rail and the plate-like construction element (3) is a metal roof panel joined to it.

11. Connection according to any of claims 1 to 10, characterised in that the groove section (6, 7) is used as a bolting channel for fixing screws for attaching bolted-on parts.

## Revendications

1. Jonction entre un profilé filé (1) et un élément de construction plan (3) contigu à ce dernier, sur une carrosserie de véhicule
caractérisée
en ce que le profilé filé (1) présente une aile longitudinale (4) qui fait saillie sur le côté et qui est disposée à peu près parallèlement au plan de raccordement de l'élément de construction plan (3),
en ce que le profilé filé (1) comporte une rainure (6), qui s'étend dans la direction longitudinale du profilé et à peu prés transversalement à l'aile longitudinale (4) du profilé,
en ce que l'élément de construction plan (3) est plié dans la région de bord de la jonction et est replié en arrière, sous forme d'un U, pour la formation d'une aile de bord (11) sur l'élément de construction,
en ce que l'aile longitudinale (4) du profilé et l'aile de bord (11) de l'élément de construction sont appliquées à plat l'une contre l'autre et jointes au moins dans la région de leurs bords,
en ce qu'il est prévu, au niveau de la jonction, une baguette couvre-joint (12) s'étendant longitudinalement, qui comporte une région en U constituant une partie de pincement (13) ouverte en direction du milieu de la baguette couvre-joint, sur un côté longitudinal, une nervure de retenue (14) s'étendant transversalement à l'ouverture en U de la partie de pincement (13), sur l'autre côté longitudinal, et une région en forme de pont (15) qui s'étend entre elles,
en ce que la partie de pincement (13) est, par son ouverture en U, emboîtée au moins en partie, selon un ajustement serré, sur la région de bord libre formée par l'aile longitudinale (4) du profilé et l'aile de bord (11) de l'élément de construction placées l'une sur l'autre, et
en ce que la nervure de retenue (14) est emboîtée, selon un ajustement serré, dans la rainure (6) du profilé.

2. Jonction selon la revendication 1, caractérisée en ce qu'une couche de colle est appliquée entre l'aile longitudinale (4) du profilé et l'aile de bord (11) de l'élément de construction, et la jonction collée est immobilisée, pendant le durcissement, par la baguette couvre-joint (12) emboîtée dessus.

3. Jonction selon la revendication 1 ou 2, caractérisée en ce que le profilé filé (1) est un profilé de support creux, sur lequel l'aile longitudinale (4) est formée d'un seul tenant sur le côté, sous forme d'une barrette.

4. Jonction selon l'une des revendications 1 à 3, caractérisée en ce que l'aile longitudinale (4) du profilé et la rainure (6) du profilé sont situées du côté de l'espace intérieur du véhicule, et
en ce qu'un joint d'étanchéité en caoutchouc (23) est posé entre la région de bord pliée de l'élément de construction plan (3) et le profilé filé (1).

5. Jonction selon la revendication 4, caractérisée en ce que, sur le joint d'étanchéité en caoutchouc (23), il est prévu une nervure longitudinale qui est retenue sur le profilé filé (1), dans une rainure de réception (8) tournée vers l'extérieur du véhicule.

6. Jonction selon la revendication 4 ou 5, caractérisée en ce que, dans la région de la jonction, le profilé filé (1) et la région pliée de l'élément de construction plan (3) présentent des surfaces inclinées (20, 21) qui sont orientées obliquement l'une vers l'autre et en direction de l'espace intérieur du véhicule, afin que soit formée, sur l'extérieur du véhicule, une gorge longitudinale (22) sur le fond de laquelle est placé le joint d'étanchéité en caoutchouc (23).

7. Jonction selon l'une des revendications 1 a 6, caractérisée en ce que le profilé filé (1) présente une aile longitudinale (4, 5) et une rainure associée (6, 7) sur chacun de ses deux côtés longitudinaux opposés.

8. Jonction selon l'une des revendications 1 a 7, caractérisée en ce qu'un canal (16) destiné a recevoir des câbles électriques et/ou des conduites de liquide (17) est formé sous la région en forme de pont (15), par un renflement de la région en forme de pont (15) et/ou du profilé filé (1).

9. Jonction selon l'une des revendications 1 a 8, caractérisée en ce que sur le côté et dans la continuité de la partie de pincement (13) de la baguette couvre-joint (12), est formé un talon de retenue élastique (18), qui s'applique contre l'élément de construction plan (3), en particulier pour son raccordement a une garniture de pavillon préformée (19).

10. Jonction selon l'une des revendications 1 a 9, caractérisée en ce que le profilé filé (1) est une traverse de toit et l'élément de construction plan (3) est une tôle de toit contiguë a cette dernière.

11. Jonction selon l'une des revendications 1 a 10, caractérisée en ce que la rainure (6, 7) du profilé est utilisée en tant que canal a vis pour des vis de liaison destinées a la fixation de pièces rapportées.
